# EUROPEAN PATENT SPECIFICATION

(11) **EP 3 437 998 B1**
(45) Date of publication and mention of the grant of the patent: **08.03.2023**
(21) Application number: 18184326.9
(22) Date of filing: 18.07.2018
(51) Int. Cl.: B64D 15/20, B64D 15/22

(54) **MANAGING RESPONSE TO ICING THREAT**
VERWALTUNG DER REAKTION AUF VEREISUNGSBEDROHUNG
GESTION DE LA RÉPONSE À UNE MENACE DE GIVRAGE

(30) Priority: 01.08.2017 US 201715666519
(43) Date of publication of application: 06.02.2019
(73) Proprietor: Honeywell International Inc., Morris Plains, NJ 07950 (US)
(72) Inventor: GORDON, Grant, Morris Plains, NJ 07950 (US); GARDE, Jason, Morris Plains, NJ 07950 (US); NORTHCUTT, Brett Gordon, Morris Plains, NJ 07950 (US); CHAPMAN, Gregory J., Morris Plains, NJ 07950 (US)
(74) Representative: Dowling, Andrew

(56) References cited:
- GB-A- 2 511 344
- US-A- 4 831 819
- US-A- 5 710 408
- US-A1- 2003 155 467
- US-A1- 2008 167 764

## Description

### BACKGROUND

For many years the threat of airframe icing has been a significant aviation hazard. When an aircraft encounters icing conditions any uninhibited accumulation of ice can lead to increased aerodynamic drag, loss of lift and increased weight. These factors reduced the overall aircraft performance and specifically result in higher stall speeds. If the exposure is prolonged, the ice accumulation can become significant and the aircraft can lose the ability to continue in stable flight.

Statistically although airframe icing accidents only accounted for a small percentage of the total aviation accidents, they resulted in 583 accidents and more than 800 fatalities during the 19-year period from 1982 to 2000. Kevin R. Petty and Carol D. J. Floyd, "A statistical Review of Aviation Airframe Icing Accidents in the US", National Transportation Safety Board (NTSB), Washington, DC.

Data from the National Transportation and Safety Board (NTSB) over this period shows that forty percent (40%) of the airframe icing accidents occurred when the airplane was in cruise, a period when pilot workload is relatively low; and the opportunity to monitor and respond to icing should be high. The next largest percentage of icing accidents occurred during takeoff when the engines are usually operating at maximum power and the pilot work load is high. Further investigation of the accident data demonstrates that both experienced and inexperience pilots are susceptible to airframe icing hazards. And that certain types of icing conditions, such as supercooled liquid droplets (SLD) can lead to different ice accumulation patterns. "A substantial amount of ... attention to supercooled large droplets (SLD), was generated when an ATR-72 ... experienced an uncommanded departure from controlled flight and crashed near Roselawn, Indiana (1994). A ridge of ice that accreted behind the deice boots contributed to an unanticipated aileron hinge moment reversal and an abrupt loss of control." In addition to growth in understanding of the threat posed by SLD it is now recognized that rougher ice shapes and larger ice sizes than those currently defined in the Technical Standard Order, TSO-C16a, certification requirements can cause large aerodynamic penalties. Not all airframe icing threats are created equal.

The threat of icing conditions to air travel is not limited to airframe icing; there is also the threat of engine events and air data instrument failures. According to Mason et al. from the 1990s to 2006, there have been over 240 icing related events of which 62 have been categorized as turbofan powerloss likely due to ice particle icing. Jeanne G. Mason, J. Walter Strapp and Philip Chow, "The Ice Particle Threat to Engines in Flight", 44th AIAA Aerospace Sciences Meeting and Exhibit, January 2006, Reno, Nevada.

In the past, ice particles were thought to be benign to the airframe and the engine due to the fact that frozen particles bounce off cold wing or engine component surfaces and do not result in any accretion. However recent research and analysis conducted by the airframe and engine manufacturers, has demonstrated that the cause of engine rollbacks was the buildup of ice on the second stage inside the engine core passage. It is important to note that a majority of the large transport aircraft events were above 22,000 feet, at the extreme of the TSO -C16a, Appendix C icing envelope for clouds containing supercooled liquid water. "While pilot reports indicate the aircraft were usually in cloud (IMC conditions), they rarely report ice build-up on aircraft surfaces, and if a Rosemount Ice Detector was installed and reports were available, it never gave any indication of ice accretion (6 cases). Pilots made comments such as `at no stage was there any visible signs of icing around windscreen, wipers or winglets', and `all the time in clouds, but no icing was observed"'. These findings all corroborate the existence of heretofore unrecognized ice crystals as the culprit for the engine events. The findings also demonstrated that many commonly used ice detectors were insensitive to the icing condition. The reason for this is that ice crystals do not adhere to cold airframe surfaces but rather bounce off. However, the crystals can partially melt and stick to relatively warm surfaces such as Air Data Probes and Engine Core surfaces. Hence an environment that is benign to the airframe and is hidden from common detection can be extremely pernicious to the engine or the air data probes.

Recently the draft EUROCAE document, ED-103, "Minimum operational performance specification for inflight icing detection systems" has defined five different icing conditions: three (3) Liquid Water (LW) drop icing conditions (LW-C, LW-FZDZ, LW-FZRA) and two (2) Ice water particles (IC: Fully glaciated Ice crystals, MP: Mixed phase). They further define the intended functions for an inflight icing detection system as including the ability to detect and discriminate one or more of these conditions. However even if this detection and discrimination ability were available over all the different icing conditions, current control systems are not equipped to use the information.

GB2511344 discloses a detection apparatus which measures liquid water content and/or ice crystal particle concentration in an airstream such as the airstream around an aircraft. A light source emits a beam of light along an emission path, and the emission path is located in a detection volume which is arranged to receive the airstream. A first optical sensor receives scattered light along a first viewing path from the detection volume and produces a first detection output. A processor analyses the first detection output of the first opticalsensor and produces a status output indicative of measured liquid water content and/or ice crystal particle concentration. The first viewing path is at a first oblique angle to the emission path. An apparatus for detecting ice accretion on a surface is also described. The apparatus may comprise an electromagnetic radiation source and a separate detector which are arranged to detect any ice accretion on the surface.

US4831819 discloses a unique anti-icing management system for a gas turbine engine is disclosed according to which, at all times, only the required amount of heat is applied to inlet surfaces of the engine to prevent the formation of ice. Heated air is bled from the compressor discharge for this purpose and the amount of flow of the heated air is adjusted by a uniquely operated solenoid valve under the direction of an electronic control responsive to any one of a variety of meaningful conditions including, but not necessarily limited to, temperature of an anti-iced surface at the inlet to the engine, rotational speed of the engine, and the presence of an ice producing meteorological condition. The solenoid valve assumes only two operable positions, namely, a fully open position and a fully closed position, and is operated in a pulsed fashion to control flow on a time basis, rather than on a percentage-of-opening basis which is the conventional mode of operation. A switching operation or mechanism within the electronic control, such as a microprocessor, is responsive to any of the aforementioned conditions to cause the solenoid valve to pulsate according to a predetermined pattern which assures a minimally sufficient flow rate of heated air to the regions to be heated.

US2003/155467 discloses systems and methods for thermally modifying an ice-to-object interface. One system includes a power supply configured to generate a magnitude of power. The magnitude of the power is sufficient to melt an interfacial layer of ice at the interface; typically the interfacial layer has a thickness in a range one micron to one millimeter. A controller may be used to limit the duration in which power supply generates the magnitude of the power, to limit unneeded heat energy dissipation into the environment. Modulating the pulsed heating energy to the interface modifies a coefficient of friction between the object and the ice.

US2008/167764 discloses a system and method of determining an actual liquid water content (Actual LWC) with an ice rate meter probe without aspiration.

US5710408 discloses an ice and snow melting system. Where at least one sensor is provided, with each sensor being configured for sensing a temperature or moisture associated with an ambient environment and providing a signal indicative thereof. A heater for melting the ice and snow includes at least two electrical conductors associated therewith. An automatic controller is connected to the at least one sensor, and includes a ground fault circuit interrupter in communication with at least two of the electrical conductors associated with the heater. The ground fault circuit interrupter detects a ground fault condition associated with the heater and provides a signal indicative thereof. The controller selectively controls operation of the heater dependent upon the sensor signal and/or the ground fault circuit interrupter signal.

### SUMMARY

According to a first aspect of the present invention there is provided an ant-ice system as claimed in claim 1 below. According to another aspect of the invention there is provided a method for managing response to icing threats to an aircraft as claimed in claim 6 below. Optional features of the invention are claimed in the dependent claims.

### DRAWINGS

Embodiments of the present invention can be more easily understood and further advantages and uses thereof more readily apparent, when considered in view of the description of the preferred embodiments and the following figures in which:
FIG. 1 is a block diagram of system for identifying, discriminating and managing the different icing threats that are faced by various features of an aircraft, including but not limited to an airframe, air data probes and engines of the aircraft.
FIG. 2 is a flow chart of a method for identifying, discriminating and managing the different icing threats to various features of an aircraft, including but not limited to, the airframe, the air data probes and the engines of the aircraft.
FIG. 3 is a flow chart of another method for identifying, discriminating and managing the different icing threats to various features of an aircraft, including but not limited to, the airframe, the air data probes and the engines of the aircraft.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

As detailed above there is a need to more effectively detect and discriminate aircraft icing threats. However, modern aircraft do not currently have accurate enough water and ice measurement devices to discern between ice, ice crystals, mixed-phase water conditions or super large droplets. Because of these limitations, aircraft manufacturers prescribe conservative approaches to ensure safety of the occupants of the aircraft. Also, operators and pilots tend to be conservative in usage of anti-ice and de-ice to ensure safety. Embodiments of the present invention provide an approach for identifying, discriminating and managing the different icing threats to the airframe and engine of an aircraft where bleed air heating is used for de-icing. The implementation of this approach is intended to provide benefits to both enhance safety and operational efficiencies.

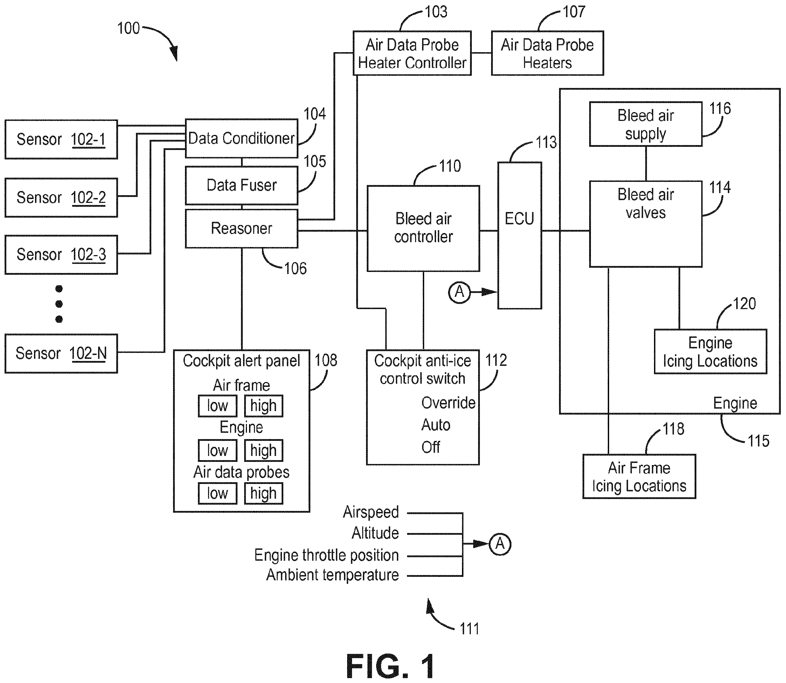

FIG. 1 is a high level functional block diagram that shows the components of a system, indicated generally at 100, that is designed to detect, discriminate and manage response to icing threats to an aircraft. It is anticipated that system 100, in one embodiment, could be a slave or an extension to existing engine bleed air controls.

System 100 measures data indicative of air borne particles in the vicinity of the aircraft. In one embodiment, system 100 employs one or more sensors 102-1 to 102-N to accurately detect and measure the size, diameter, shape, and type of air borne particles including ice and water. For example a single sensor (102-1) such as a Backscatter Cloud Probe with Polarization detection (BCPD) probe could be used by itself. Alternatively, the BCPD, in other embodiments is supported by other sensors (102-2 to 102-N) which capture total air temperature (e.g., total air temperature (TAT) probe or other temperature sensor), altitude, speed and/or other data that could be useful in determining the size, shape and type of air borne particles in the vicinity of the aircraft.

System 100 also include data conditioner 104. Data conditioner 104 is coupled to sensors 102-1 to 102-N. Data conditioner 104 provides, for example, trending, smoothing, data error detection and other signal processing enhancements to the feature set of data from sensors 102-1 to 102-N.

If multiple sensors 102 are used data fusion techniques are employed by data fuser 105 to add robustness to the detection and discrimination stages. Data fusion is the integration and aggregation of data from multiple sources to achieve improved accuracy and more specific inferences than what can be obtained from a single source of data alone. The basic tenet underlying the data/information fusion concept is to leverage all available information to enhance the diagnostic capability, reliability, and accuracy of the system, e.g., reduce the number of false alarms.

System 100 also includes reasoner 106. Reasoner 106 receives the conditioned data from data conditioner 104 via data fuser 105, if data fusion is used, otherwise reasoner 106 may receive the conditioned data directly from data conditioner 104. Reasoner 106 uses the incoming data along with an implicit or explicit knowledge base to determine the severity of the icing threat with respect to both the air frame and the engine of the aircraft. In one embodiment, reasoner 106 is implemented by training a classifier to assign the real time data features from data conditioner 104 to regions of a two-dimensional space representing severity and location (engine, airframe, air data probes) of the icing threat.

To enhance the management of the icing threat, the classification metrics (severity and location) would be provided by the reasoner 106 to a cockpit alert panel 108. For example, the cockpit alert panel may provide visual indicators of high and low threat for each of the air frame, engine, and air data probes of the aircraft as shown. Further, the cockpit alert panel may also include an audible indication for each condition detected for the air frame, engine and air data probes. Embodiments described in this specification provide both automation of the ice protection system and the automatic alerting which will help to reduced pilot workload and improved safety. Reasoner 106 also provides data on the detected threat to one or more controllers, e.g., bleed air controller 110 and air data probe heater controller 103. The controllers use the output of reasoner 106 to create an appropriate response to the detected icing threat.

In one embodiment, the controllers includes a bleed air controller 110. Bleed air controller 110 uses the data from reasoner 106 to manage the response of the aircraft's de-icing equipment to detected threats to certain features of the aircraft, e.g., the engine, and the airframe. Bleed air controller 110, in one embodiment, is designed to complement the existing de-icing approach used in conventional aircraft. In this embodiment, bleed air controller 110 is responsive to a cockpit anti-ice control switch 112. Switch 112, in one embodiment, has three settings: off, auto and override. In the off position, switch 112 prevents the bleed air controller 110 from taking any action to provide bleed air to any portion of the aircraft; e.g., to the engine or airframe. In the auto position, switch 112 instructs bleed air controller to provide bleed air from bleed air supply 116 to the air frame icing locations 118 and/or engine icing locations 120 via bleed air valves 114 based on the output of the reasoner 106. In this manner, the reasoner 106 directs the bleed air controller 110 to provide an appropriate amount of bleed air to either the air frame icing locations 118, the engine icing locations 120, or both based on the severity of any detected icing threat. This enables the bleed air levels to be reduced based on the severity of the conditions and to be delivered to those regions of the aircraft where they are most needed. In the override position, switch 112 instructs the bleed air controller 110 to by-pass any automatically controlled functions and the system would operate the ice protection system in its present unmodulated or location indiscriminate configuration. This condition (override) corresponds to turning on a conventional bleed air system by overriding the output of the reasoner 106.

The controllers also include an air data probe heater controller 103. The air data probe heater controller 103 controls the amount of electrical power provided to air data probe heaters 107 based on data from reasoner 106 to control the de-icing response for the air data probes of the aircraft. In other embodiments, the electrical heaters are used to respond to icing threats on other parts of the aircraft. As with bleed air controller 110, air data probe controller 103 is responsive to switch 112. As discussed above, switch 112 has three settings: off, auto and override. In the off position, switch 112 prevents the air data probe heater controller 103 from taking any action to provide electrical power to any portion of the aircraft; e.g., to the air data probe heaters 107. In the auto position, switch 112 instructs air data probe heater controller 103 to provide electrical power to the air data probe heaters 107 based on the output of the reasoner 106. In this manner, the reasoner 106 directs the air data probe heater controller 103 to provide an appropriate amount of electrical power to the air data probe heaters 107 based on the severity of any detected icing threat to the air data probes. This enables the electrical power levels to be reduced based on the severity of the conditions and to be delivered to the appropriate heaters. In the override position, switch 112 instructs the air data probe heater controller 103 to by-pass any automatically controlled functions and the system would operate the ice protection system in its present unmodulated or location indiscriminate configuration. This condition (override) corresponds to turning on a conventional air data probe control systems by overriding the output of the reasoner 106 and providing full electrical power to the air data probe heaters 107.

As discussed above, embodiments of system 100 enable reduction in pilot workload and improve safety in operating an aircraft. Additionally, embodiments of the present invention may also provide significant improvements in operational efficiency of the aircraft. Although bleed air configurations vary by platform, during take-off, climb and cruise the cabin bleed demand is about one percent (1% ) engine core flow, one percent (1%) nacelle and approximately five to seven percent (~5-7%) wing leading edge de-icing applications. At lower power settings, the bleed air percentage goes up to meet a given (constant) bleed air demand. When bleed air is used engine efficiency reduces and the turbine temperatures are driven up. And hence to compensate, the engines are cut back and forced to run at lower power. The use of bleed air also increases engine fuel consumption. Anti-ice systems are only turned on when needed because of the negative effects on thrust and fuel consumption. Some anti-ice valve designs are either on or off, not graduated. So once they are turned on, the valves supply bleed air for a conservative worst case demand profile. If this supplied bleed air supply is greater than the true need, engine thrust and efficiency is unnecessarily reduced. Embodiments of the present invention reduce the amount of bleed flow and as such require valves that can be modulated which improves the engine efficiency because an unnecessary load (excess bleed air) is removed.

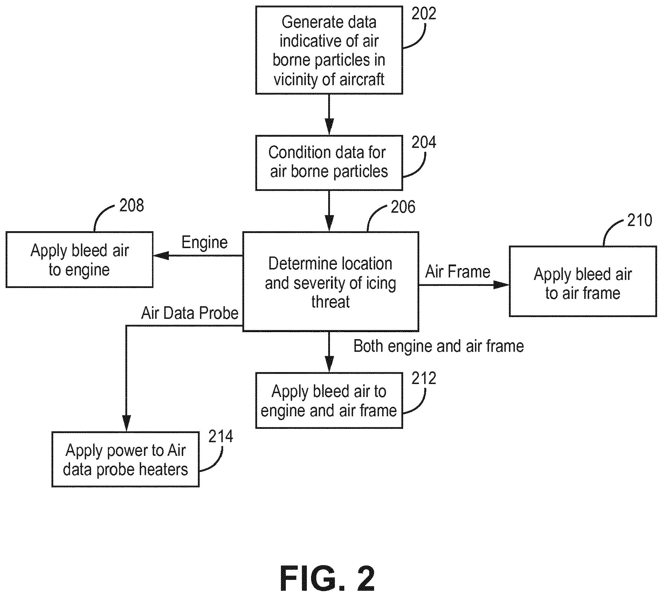

FIG. 2 is a flow chart that illustrates one embodiment of a method for managing response to icing threats to an aircraft using, for example, system 100 of FIG. 1. The method begins at block 202 and generates data indicative of airborne particles in the vicinity of an aircraft. For example, this data is generated with a plurality of sensors, e.g., sensors 102-1 to 102-N of FIG. 1, including, e.g., a BCPD sensor. At block 204, the method conditions the data concerning the air borne particles. For example, the method provides conditioning such as trending, smoothing, data error detection and other signal processing enhancements to the feature set of data. Further, in some embodiments, the method also fuses data from multiple sensors at block 204.

At block 206, the method uses the conditioned data (and fused data when present) to manage the response to the icing threat. The method determines the location and severity of the icing threat for the aircraft. If the threat is to the engine, the method applies bleed air to the engine at block 208. If the threat is to the air frame, the method applies bleed air to the air frame at block 210. However, if the method determines that the icing threat is to both the engine and the air frame, bleed air is applied to the both the air frame and the engine at block 212. At each of blocks 208, 210, and 212, in one embodiment, the amount of bleed air provided to the engine and/or air frame is dependent on the severity of the icing threat determined at block 206.

Further, if at block 206, the method determines that the icing threat is to the air data probes, the method applies electrical power to the air data probe heaters at block 214. As with the application of bleed air, the amount of electrical power applied to the air data probe heaters is dependent on the severity of the icing threat determined in block 206.

FIG. 1 shows a generic high level functional diagram of a system 100 for managing icing threats on an aircraft. Specific implementations would need to consider the platform specific design considerations. There are also regulatory issues to be considered. Engine power setting is adjusted by the engine control unit (ECU) 113 to ensure the engine is operating within engine limits. The engine control unit 113 receives aircraft signals that define the bleed configuration, including but not limited to airspeed, altitude, engine throttle position, and ambient temperature. Based upon the combination of cabin bleed, nacelle anti-ice and wing anti-ice configuration presented, the engine control unit 113 will adjust engine power setting by a pre-defined amount. It is likely that an engine designed to have a power setting that would respond continuously to a reported bleed flow would face significant regulatory certification challenges. However there are a number of operational environments where a reported bleed load configuration with more than two (on/off) discrete states could provide benefits.

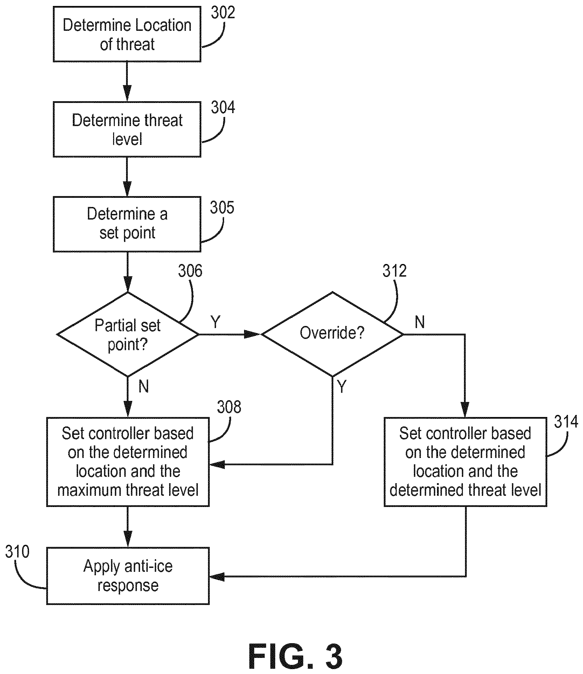

FIG. 3 illustrates one embodiment of a process flow that implements indexed set points for the bleed air controller 110 of FIG. 1. In this embodiment, system 100 uses three set points. The middle set point, which the pilot could override, would allow for operating at better performance while still running bleed air. This middle set point could mitigate low level icing threats to the engine, airframe or both, whereas the full on set points would be used for the highest threat levels. In other embodiments, additional indexed set points enable further subdivision of the engine power setting.

Advantageously, embodiments of the present invention are more effective and expansive than conventional systems in managing response to icing threats to an aircraft. Embodiments of the present invention consider the severity of the icing threat and directs the bleed air to the locations where it is needed the most.

## Claims

1. An anti-ice system (100) for an aircraft, the anti-ice system comprising:
one or more sensors (102-1 to 102-N) that are configured, alone or in combination, to generate data indicative of one or more of a size, shape, density and type of air borne particles in the vicinity of the aircraft;
a data conditioner (104), coupled to the one or more sensors, that is configured to prepare the data for processing;
a reasoner (106), coupled to the data conditioner, that is configured to determine from the data from the data conditioner, the severity and location of an icing threat to an airframe (118), at least one engine (120) and at least one air data probe; and
one or more controllers (110, 103), responsive to the reasoner, wherein the one or more controllers automatically operate an anti-icing mechanism for at least one of the at least one engine, the airframe, and the at least one air data probe depending on the icing threats determined by the reasoner wherein one or more controllers includes:
a bleed air controller (110), and valves (114), responsive to the reasoner, wherein the bleed air controller automatically operates the valves to selectively apply bleed air (116) to the at least one engine , the airframe or both depending on the severity of the icing threats determined by the reasoner, and an air data probe heater controller (103), responsive to the reasoner, wherein the air data probe heater controller is configured to control the amount of electrical power applied to one or more air data probe heaters (107)..

2. The anti-ice system of claim 1, wherein the one or more sensors comprise a plurality of sensors and wherein the data conditioner is coupled to a data fuser (105) that is configured to fuse the data from the one or more sensors.

3. The anti-ice system of claim 1, and further comprising a cockpit anti-ice control switch (112) that is configured to enable a user to override automatic operation of the plurality of controllers.

4. The anti-ice system of claim 1, wherein the one or more sensors includes at least one Backscatter Cloud Probe with Polarization detection (BCPD) probe.

5. The anti-ice system of claim 3, wherein the bleed air controller operates at one of three bleed load set points: a zero bleed air set point, a maximum bleed air set point and a middle bleed air set point, wherein the middle bleed air set point is selected by the bleed air controller when the reasoner determines a low level threat to the at least one engine, the airframe or both, unless the middle set point is overridden by the cockpit anti-ice control switch.

6. A method for managing response to icing threats to an aircraft, the method comprising:
generating data indicative of the size, shape and type of air borne particles in the vicinity of the aircraft (202);
conditioning the data for processing (204);
determining the severity and location of an icing threat from the conditioned data (206);
directing a bleed air controller to apply bleed air to at least one of at least one engine and an air frame and directing an air data probe heater controller to apply electrical power to the air data probes in an amount determined based on the determined severity level to the determined location (208, 210, 212, 214).

7. The method of claim 6, wherein generating data comprises generating data with a Backscatter Cloud Probe with Polarization detection (BCPD) probe.

## Patentansprüche

1. Eisschutzsystem (100) für ein Flugzeug, wobei das Eisschutzsystem umfasst:
einen oder mehrere Sensoren (102-1 bis 102-N), die so konfiguriert sind, dass sie allein oder in Kombination Daten erzeugen, die eine oder mehrere Angaben zu Größe, Form, Dichte und Art von luftgetragenen Partikeln in der Nähe des Flugzeugs enthalten;
einen Datenaufbereiter (104), der mit dem einen oder den mehreren Sensoren gekoppelt ist und so konfiguriert ist, dass er die Daten zur Verarbeitung herstellt;
einen mit dem Datenaufbereiter gekoppelten Reasoner (106), der so konfiguriert ist, dass er aus den Daten des Datenaufbereiters den Schweregrad und die Position einer Vereisungsgefahr für eine Flugzeugzelle (118), mindestens ein Triebwerk (120) und mindestens eine Luftdatensonde bestimmt; und
eine oder mehrere Steuerungen (110, 103), die auf den Reasoner reagieren, wobei die eine oder mehreren Steuerungen automatisch einen Vereisungsschutzsystemus für mindestens eines von dem mindestens einen Triebwerk, der Flugzeugzelle und der mindestens einen Luftdatensonde in Abhängigkeit von den durch den Reasoner bestimmten Vereisungsbedrohungen betreiben, wobei eine oder mehrere Steuerungen einschließen können:
eine Zapfluftsteuerung (110) und Ventile (114), die auf den Reasoner ansprechen, wobei die Zapfluftsteuerung die Ventile automatisch betätigt, um Zapfluft (116) selektiv auf das mindestens eine Triebwerk, die Zelle oder beide in Abhängigkeit von der durch den Reasoner bestimmten Schwere der Vereisungsbedrohungen aufzubringen, und eine Luftdatensonden-Heizungssteuerung (103), die auf den Reasoner anspricht, wobei die Luftdatensonden-Heizungssteuerung so konfiguriert ist, dass sie die Menge an elektrischer Leistung steuert, die auf eine oder mehrere Luftdatensonden-Heizungen (107) angewendet wird.

2. Eisschutzsystem nach Anspruch 1, wobei der eine oder die mehreren Sensoren eine Vielzahl von Sensoren umfassen und wobei der Datenaufbereiter mit einem Datenfixierer (105) gekoppelt ist, der so konfiguriert ist, dass er die Daten von dem einen oder den mehreren Sensoren fusioniert.

3. Eisschutzsystem nach Anspruch 1, das ferner einen Cockpit-Eisschutz-Steuerungsschalter (112) umfasst, der so konfiguriert ist, dass er es einem Benutzer ermöglicht, die automatische Operation der Vielzahl von Steuerungen außer Kraft zu setzen.

4. Eisschutzsystem nach Anspruch 1, wobei der eine oder die mehreren Sensoren mindestens eine Backscatter Cloud Probe mit Polarisationsdetektion (BCPD) einschließen können.

5. Eisschutzsystem nach Anspruch 3, bei dem die Steuerung für die Zapfluft an einem von drei Zapfluft-Sollwerten arbeitet: einem Null-Zapfluft-Sollwert, einem Maximal-Zapfluft-Sollwert und einem mittleren Zapfluft-Sollwert, wobei der mittlere Zapfluft-Sollwert von der Steuerung für die Zapfluft ausgewählt wird, wenn der Reasoner eine Bedrohung auf niedrigem Level für das mindestens eine Triebwerk, die Flugzeugzelle oder beide bestimmt, es sei denn, der mittlere Sollwert wird durch den Eisschutz-Steuerungsschalter im Cockpit außer Kraft gesetzt.

6. Verfahren zur Verwaltung der Reaktion auf Vereisungsbedrohungen für ein Flugzeug, wobei das Verfahren umfasst:
Erzeugen von Daten, die die Größe, Form und Art von luftgetragenen Partikeln in der Nähe des Flugzeugs anzeigen (202);
Aufbereitung der Daten für die Verarbeitung (204);
Bestimmen des Schweregrads und der Position einer Vereisungsgefahr aus den aufbereiteten Daten (206);
Anweisen einer Zapfluftsteuerung, Zapfluft auf mindestens einen von mindestens einem Motor und einem Rahmen aufzubringen, und Anweisen einer Steuerung für eine Luftdatensondenheizung, elektrische Energie auf die Luftdatensonden in einer Menge anzuwenden, die basierend auf dem bestimmten Schweregrad an der bestimmten Position (208, 210, 212, 214) bestimmt wird.

7. Verfahren nach Anspruch 6, wobei das Erzeugen von Daten das Erzeugen von Daten mit einer Backscatter Cloud Probe mit Polarisationsdetektion (BCPD) umfasst.

## Revendications

1. Système d'anti-givrage (100) pour un aéronef, le système d'anti-givrage comprenant :
un ou plusieurs capteurs (102-1 à 102-N) qui sont configurés, seuls ou en combinaison, pour générer des données indiquant un ou plusieurs éléments parmi une taille, une forme, une densité et un type de particules en suspension dans l'air à proximité de l'aéronef ;
un conditionneur de données (104), couplé au(x) capteur(s), qui est configuré pour préparer les données pour le traitement ;
un raisonneur (106), couplé au conditionneur de données, qui est configuré pour déterminer, à partir des données provenant du conditionneur de données, la gravité et l'emplacement d'une menace de givrage pour une cellule (118), au moins un moteur (120) et au moins une sonde de données aérodynamiques ; et
un ou plusieurs organes de commande (110, 103), répondant au raisonneur, dans lequel le ou les organes de commande actionnent automatiquement un mécanisme d'anti-givrage pour au moins un élément parmi le au moins un moteur, la cellule et la au moins une sonde de données aérodynamiques en fonction des menaces de givrage déterminées par le raisonneur, dans lequel un ou plusieurs organes de commande comprennent :
un organe de commande de prélèvement d'air (110) et des vannes (114), répondant au raisonneur, dans lequel l'organe de commande de prélèvement d'air actionne automatiquement les vannes pour appliquer sélectivement l'air de prélèvement (116) à l'au moins un moteur, à la cellule ou aux deux selon le la gravité des menaces de givrage déterminée par le raisonneur, et un organe de commande de réchauffeur de sonde de données aérodynamiques (103), répondant au raisonneur, dans lequel l'organe de commande de réchauffeur de sonde de données aérodynamiques est configuré pour commander la quantité d'énergie électrique appliquée à une ou plusieurs réchauffeurs de sondes de données aérodynamiques (107).

2. Système d'anti-givrage selon la revendication 1, dans lequel le ou les capteurs comprennent une pluralité de capteurs et dans lequel le conditionneur de données est couplé à un fusionneur de données (105) qui est configuré pour fusionner les données provenant du ou des capteurs.

3. Système d'anti-givrage selon la revendication 1 et comprenant en outre un commutateur de commande d'anti-givrage de cockpit (112) qui est configuré pour permettre à un utilisateur d'annuler le fonctionnement automatique de la pluralité des organes de commande.

4. Système d'anti-givrage selon la revendication 1, dans lequel le ou les capteurs comprennent au moins une sonde de nuage par rétrodiffusion avec détection de polarisation (BCPD).

5. Système d'anti-givrage selon la revendication 3, dans lequel l'organe de commande de prélèvement d'air fonctionne à l'un des trois points de consigne de charge de prélèvement : un point de consigne de prélèvement d'air nul, un point de consigne de prélèvement d'air maximum et un point de consigne de prélèvement d'air moyen, dans lequel le point de consigne de prélèvement d'air moyen est sélectionné par l'organe de commande de prélèvement d'air lorsque le raisonneur détermine une menace de bas niveau pour l'au moins un moteur, la cellule ou les deux, à moins que le point de consigne moyen ne soit annulé par le commutateur de commande d'anti-givrage de cockpit.

6. Procédé pour gérer la réponse aux menaces de givrage sur un aéronef, le procédé comprenant :
la génération de données indiquant la taille, la forme et le type de particules en suspension dans l'air à proximité de l'aéronef (202) ;
le conditionnement des données pour le traitement (204) ;
la détermination de la gravité et de l'emplacement d'une menace de givrage à partir des données conditionnées (206) ;
l'ordre donné à un organe de commande de prélèvement d'air d'appliquer de l'air de prélèvement à au moins un élément parmi au moins un moteur et une cellule et l'ordre donné à un organe de commande de réchauffeur de sonde de données aérodynamiques d'appliquer une puissance électrique aux sondes de données aérodynamiques en une quantité déterminée sur la base du niveau de gravité déterminé à l'emplacement déterminé (208, 210, 212, 214).

7. Procédé selon la revendication 6, dans lequel la génération de données comprend la génération de données au moyen d'une sonde de nuage par rétrodiffusion avec détection de polarisation (BCPD).
